# EUROPEAN PATENT APPLICATION

(11) **EP 3 985 510 A1**
(43) Date of publication of application: **20.04.2022**
(21) Application number: 20892078.5
(22) Date of filing: 16.11.2020
(51) Int. Cl.: G06F 9/50

(54) **GPU OPERATING METHOD, APPARATUS, DEVICE, AND STORAGE MEDIUM**

(30) Priority: 28.11.2019 CN 201911195458
(71) Applicant: ZTE Corporation, shenzhen Guangdong 518057 (CN)
(72) Inventor: WANG, Kewen, Shenzhen, Guangdong 518057 (CN); TANG, Bo, Shenzhen, Guangdong 518057 (CN)
(74) Representative: Zoli, Filippo
(86) International application number: PCT/CN2020/129109
(87) International publication number: WO 2021/104083

(57) **Abstract**

Provided are a GPU operating method, apparatus, device, and storage medium; on the basis of an MPS Server process running on a shared GPU, at least two processes in a to-be-run container are run on the shared GPU at the same time (S101), the shared GPU being the GPU currently running the MPS Server process.

## Description

### CROSS-REFERENCE TO RELATED APPLICATION

The present application is based on and claims the priority of Chinese patent application No. 201911195458.6 filed on November 28, 2019, the disclosure of which is incorporated herein by reference in its entirety.

### TECHNICAL FIELD

Embodiments of the present disclosure relate to but are not limited to the technical field of processor application, and in particular relate to but are not limited to a GPU operating method, device and apparatus, and a storage medium.

### BACKGROUND

Due to the remarkable compute capability of Graphics Processing Units (GPUs), more and more fields and applications use GPUs to improve the operating efficiency, such as the fields of high-performance computing and deep learning. Meanwhile, with the popularity of container technology, more and more applications use containers and container clouds as tools for inter-application isolation and application orchestration and scheduling.

First, in terms of using GPUs by containers, some scenarios, such as deep learning training, require exclusive use of one or more GPUs to accelerate model training. However, in some other scenarios, such as model inference, the exclusive use of one GPU by one container is a waste of the powerful compute capability of the GPU. The currently provided inter-process GPU sharing scheme supports processes in multiple containers to share one same GPU, but this scheme adopts the approach of time slicing, so that the GPU can be used by the process in only one single container at one time, and it is hardly possible for multiple containers to share the same GPU in parallel, which may result in low GPU utilization.

### SUMMARY

The GPU operating method, device and apparatus, and the storage medium provided by the embodiments of the present disclosure are intended to address, at least in part, one of the related technical problems, including the problem of low GPU utilization.

In view of this, the embodiments of the present disclosure provide a GPU operating method, including: running, based on a multi-process service (MPS) server process running on a shared GPU, processes in at least two to-be-run containers simultaneously on the shared GPU, where the shared GPU is a GPU on which the MPS Server process is currently running.

The embodiments of the present disclosure further provide a GPU operating device, including: a running module configured to run, based on an MPS Server process running on a shared GPU, processes in at least two to-be-run containers simultaneously on the shared GPU, where the shared GPU is a GPU on which the MPS Server process is currently running.

The embodiments of the present disclosure further provide a GPU operating apparatus including a processor, a memory and a communication bus, where the communication bus is configured to implement connection and communication between the processor and the memory; and the processor is configured to execute a GPU operating program stored in the memory to implement: running, based on a multi-process service (MPS) server process running on a shared GPU, processes in at least two to-be-run containers simultaneously on the shared GPU, where the shared GPU is a GPU on which the MPS Server process is currently running.

The embodiments of the present disclosure further provide a storage medium storing a GPU operating program, where the GPU operating program is executable by one or more processors to perform: running, based on a multi-process service (MPS) server process running on a shared GPU, processes in at least two to-be-run containers simultaneously on the shared GPU, where the shared GPU is a GPU on which the MPS Server process is currently running.

Other features and corresponding beneficial effects of the present disclosure are explained in the subsequent description, and it should be understood that at least some of the beneficial effects become apparent from the description of the present disclosure.

### BRIEF DESCRIPTION OF DRAWINGS

Fig. 1 is a flowchart of a GPU operating method according to embodiment I of the present disclosure;
Fig. 2 is a flowchart of the running, on a GPU, of an MPS Server process according to embodiment I of the present disclosure;
Fig. 3 is a flowchart of the running, on a GPU, of a process in an MPS Server container according to embodiment I of the present disclosure;
Fig. 4 is a flowchart of the running, on a GPU, of to-be-run containers according to embodiment I of the present disclosure;
Fig. 5 is a flowchart of a GPU operating method according to embodiment II of the present disclosure;
Fig. 6 is a schematic diagram of the operation of an apparatus of example I according to embodiment II of the present disclosure;
Fig. 7 is a schematic diagram of the operation of an apparatus of example II according to embodiment II of the present disclosure;
Fig. 8 is a flowchart of a GPU operating method according to embodiment III of the present disclosure;
Fig. 9 is a schematic diagram of the operation of an apparatus of example I according to embodiment III of the present disclosure;
Fig. 10 is a schematic diagram of the operation of an apparatus of example II according to embodiment III of the present disclosure; and
Fig. 11 is a schematic diagram of the structure of a GPU operating apparatus according to embodiment V of the present disclosure.

### DETAILED DESCRIPTION

In order to make the objective, technical schemes and advantages of the present disclosure clearly understood, the embodiments of the present disclosure will be further illustrated in detail by means of specific embodiments in conjunction with the accompanying drawings. It should be understood that the particular embodiments described herein are only intended to explain the present disclosure, and are not intended to limit the present disclosure.

### Embodiment I:

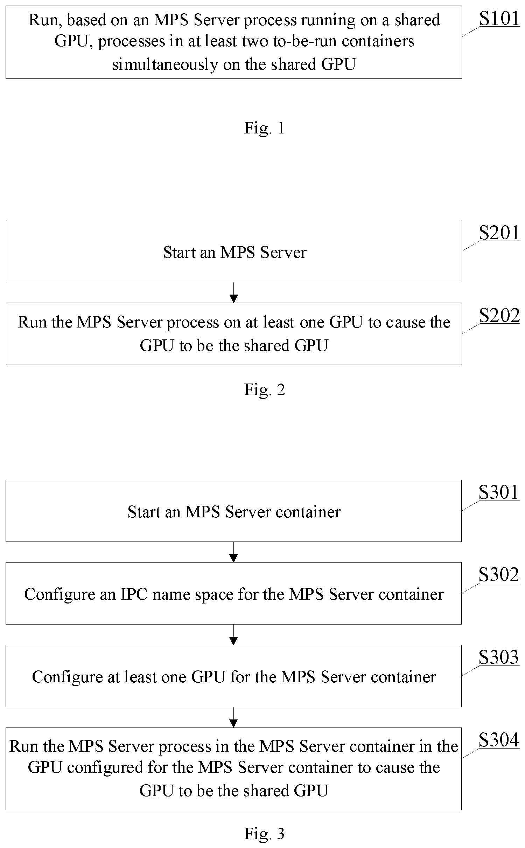

The currently provided inter-process GPU sharing scheme supports processes in multiple containers to share one same GPU, but this scheme adopts the approach of time slicing, so that only a process in one single container can use the GPU at one time, and it is not possible for multiple containers to share the same GPU in parallel, which results in low GPU utilization. To solve the above technical problem, this embodiment of the present disclosure provides a GPU operating method, and as shown in Fig. 1, the GPU operating method includes the following step.

At S101, based on an MPS Server process running on a shared GPU, processes in at least two to-be-run containers are simultaneously run on the shared GPU.

In the embodiment of the present disclosure, the shared GPU is a GPU on which the MPS Server process is currently running. It should be noted that based on multi-process service (MPS) technology, it is possible to run multiple processes in parallel on the same GPU. Therefore, in the embodiment of the present disclosure, based on a multi-process service (MPS Server) process running on a shared GPU, it is possible to run processes in at least two to-be-run containers in parallel on the shared GPU, that is, it is possible to run processes in the at least two to-be-run containers simultaneously on the shared GPU, thereby enabling multiple containers to share the same GPU in parallel, thus improving the GPU utilization.

In the embodiment of the present disclosure, a to-be-run container may be a container that implements an inference job, and of course, it may also be other containers.

In the embodiment of the present disclosure, the shared GPU supports processes in at least two to-be-run containers to run in parallel on it, and it should be understood that the shared GPU also supports a process in one to-be-run container to run on it, for example, a process in one to-be-run container may be run on the shared GPU based on the MPS Server process running on the shared GPU.

In the embodiment of the present disclosure, in order to run, based on the MPS Server process running on the shared GPU, processes in the at least two to-be-run containers simultaneously on the shared GPU, the to-be-run containers establish communication with an MPS Server, where inter-process communication (IPC) communication may be established. In order for the to-be-run containers to establish the IPC communication with the MPS Server, the IPC name space for the to-be-run containers is identical to the IPC name space corresponding to the MPS Server process, i.e., the to-be-run containers and the MPS Server belong to the same IPC name space. In other words, in the embodiment of the present disclosure, in S101, based on the MPS Server process running on the shared GPU, processes in the at least two to-be-run containers are run simultaneously on the shared GPU, where the IPC name space for the at least two to-be-run containers is identical to the IPC name space corresponding to the MPS Server process.

In the embodiment of the present disclosure, before running, based on an MPS Server process running on a shared GPU, processes in at least two to-be-run containers simultaneously on the shared GPU in S101, with reference to Fig. 2, the method further includes the following steps.

At S201, an MPS Server is started.

At S202, the MPS Server process is run on at least one GPU to cause the GPU to be the shared GPU.

In the embodiment of the present disclosure, at least one GPU and at least one MPS Server are included. The MPS Server is started and a MPS Server process is run on the at least one GPU to cause the GPU on which the MPS Server process is run to be the shared GPU.

In the embodiment of the present disclosure, the MPS Server may be directly started in an operating system and a process of the MPS Server may be run on the at least one GPU to cause the GPU to be the shared GPU. In this way, the IPC name space corresponding to the MPS Server process is the IPC name space for the operating system, and then in S101, based on the MPS Server process running on the shared GPU, processes in at least two to-be-run containers belonging to the same IPC name space as the operating system are run on the shared GPU.

In the embodiment of the present disclosure, it is also possible to start an MPS Server container to start the MPS Server. That is, before starting the MPS Server, the MPS Server is containerized (i.e., the MPS Server is made into a container image) to obtain the MPS Server container, then the MPS Server container is started to start the MPS Server, and the MPS Server process in the MPS Server container is run on at least one GPU. In this way, the IPC name space corresponding to the MPS Server process is the IPC name space for the MPS Server container, and then in S 101, based on the MPS Server process running on the shared GPU, processes in at least two to-be-run containers belonging to the same IPC name space as the MPS Server container are run simultaneously on the shared GPU.

In the embodiment of the present disclosure, as shown in Fig. 3, the process of starting the MPS Server container and running the MPS Server process in the MPS Server container on at least one GPU may be as follows.

At S301, the MPS Server container is started.

In the embodiment of the present disclosure, N (where N is an integer greater than or equal to 1) MPS Servers may be included, and thus the MPS Servers may be containerized respectively to obtain N MPS Server containers.

In the embodiment of the present disclosure, in S301, at least one MPS Server container may be started.

At S302, an IPC name space is configured for the MPS Server container.

In the embodiment of the present disclosure, after starting the at least one MPS Server container, an IPC name space is configured for each MPS Server container, where the configured IPC name space may be the IPC name space for the operating system, or other IPC name space.

In the embodiment of the present disclosure, when configuring an IPC name space for each MPS Server container, the IPC name space for each MPS Server container may be the same or different.

At S303, at least one GPU is configured for the MPS Server container.

In the embodiment of the present disclosure, at least one GPU is configured for each of the started MPS Server containers, respectively. It should be understood that MPS Server containers corresponding to different GPUs may be the same or different.

At S304, in the GPU configured for the MPS Server container, the MPS Server process in the MPS Server container is run to cause the GPU to be the shared GPU.

In the GPU configured for each MPS Server container, the MPS Server process in the MPS Server container is run to cause the GPU to be the shared GPU.

For a better understanding, the example of starting two MPS Server containers is illustrated here. MPS Server container 1 and MPS Server container 2 are started, a first IPC name space is configured for MPS Server container 1, a second IPC name space is configured for MPS Server container 2 (where the first IPC name space and the second IPC name space may be the same or different), and GPU0 and GPU1 are configured for MPS Server container 1 and GPU2 for MPS Server container 2, then MPS Server process 1 in MPS Server container 1 is run on GPU0 and GPU1, and MPS Server 1 in MPS Server container 2 is run on GPU2, so that GPU0, GPU1 and GPU2 are all shared GPUs.

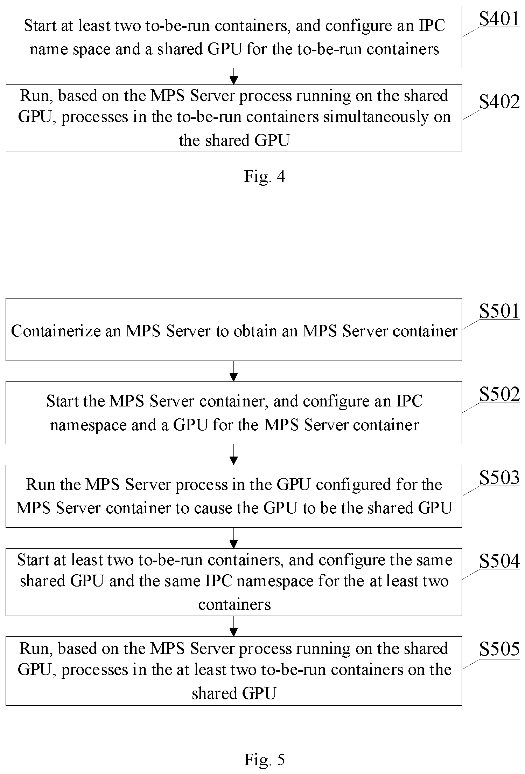

In the embodiment of the present disclosure, as shown in Fig. 4, running, based on the MPS Server process running on the shared GPU, processes in at least two to-be-run containers belonging to the same IPC name space as the MPS Server container simultaneously on the shared GPU includes the following steps.

At S401, at least two to-be-run containers are started, and an IPC name space and a shared GPU are configured for the to-be-run containers.

In the embodiment of the present disclosure, at least two to-be-run containers are started, and an IPC name space and a shared GPU are configured for the at least two to-be-run containers. In this case, the IPC name space configured for the to-be-run containers is identical to the IPC name space for the MPS Server container corresponding to the configured shared GPU. The MPS Server container corresponding to the shared GPU is: an MPS Server container to which the MPS Server process running on the shared GPU belongs.

At S402, based on the MPS Server process running on the shared GPU, processes in the to-be-run containers are simultaneously run on the shared GPU.

Based on the MPS Server process running on the shared GPU, processes in the at least two to-be-run containers are simultaneously run on the shared GPU.

For example, assume that MPS Server process 3 in MPS Server container 3 is running on shared GPU 3, and MPS Server container 3 belongs to a third IPC name space. The to-be-run container 1 and to-be-run container 2 are started, and the shared GPUs configured for both the to-be-run container 1 and to-be-run container 2 are the shared GPU 3, and the IPC name spaces configured for both are the third IPC name space, then processes in both the to-be-run container 1 and the to-be-run container 2 are simultaneously run on the shared GPU 3 based on MPS Server process 3.

In the embodiment of the present disclosure, while running processes in the at least two to-be-run containers simultaneously on the shared GPU based on the MPS Server process running on the shared GPU in S 101, the MPS Server process may also be disabled from running on at least one designated GPU to cause the GPU to be an exclusive GPU, where the designated GPU is a GPU other than the shared GPU, and the exclusive GPU is a GPU that only supports a process in one container to run on it at one time. In other words, in the embodiment of the present disclosure, when at least two GPUs are included, the coexistence of the shared GPU and the exclusive GPU is possible.

In the GPU operating method provided in the embodiment of the present disclosure, processes in at least two to-be-run containers are run simultaneously on a shared GPU based on an MPS Server process running on the shared GPU, where the shared GPU is a GPU on which the MPS Server process is currently running, and in some implementations, based on the MPS Server process running on the shared GPU, it is possible to run processes in the at least two to-be-run containers simultaneously on the shared GPU, thereby enabling multiple to-be-run containers to share one GPU at the same time, that is, processes in multiple containers can run simultaneously on one GPU, thus improving the GPU utilization.

### Embodiment II:

For a better understanding of the present disclosure, this embodiment is illustrated with more specific examples. Reference may be made to Fig. 5. Fig. 5 is a flowchart of a GPU operating method provided by the embodiment of the present disclosure. The GPU operating method includes the following steps.

At S501, an MPS Server is containerized to obtain an MPS Server container.

In the embodiment of the present disclosure, the Server is containerized to obtain the MPS Server container, that is, the MPS Server is made into a container image to obtain the MPS Server container.

At S502, the MPS Server container is started and an IPC namespace and a GPU are configured for the MPS Server container.

Here, the IPC namespace configured for the MPS Server container may be the IPC namespace for the operating system.

At S503, an MPS Server process is run in the GPU configured for the MPS Server container to cause the GPU to be the shared GPU.

In the GPU configured for the MPS Server container, the MPS Server process in the MPS Server container is run to cause the GPU to be the shared GPU.

At S504, at least two to-be-run containers are started, and the same shared GPU and the same IPC namespace are configured for the at least two containers.

In the embodiment of the present disclosure, the IPC namespace configured for the to-be-run containers is identical to the IPC namespace for the MPS Server container corresponding to the shared GPU.

At S505, based on the MPS Server process running on the shared GPU, processes in the at least two to-be-run containers are run on the shared GPU.

Based on the MPS Server process running on the shared GPU, processes in the at least two to-be-run containers started in S504 are simultaneously run on the shared GPU.

For a better understanding, two examples are illustrated here.

### Example I:

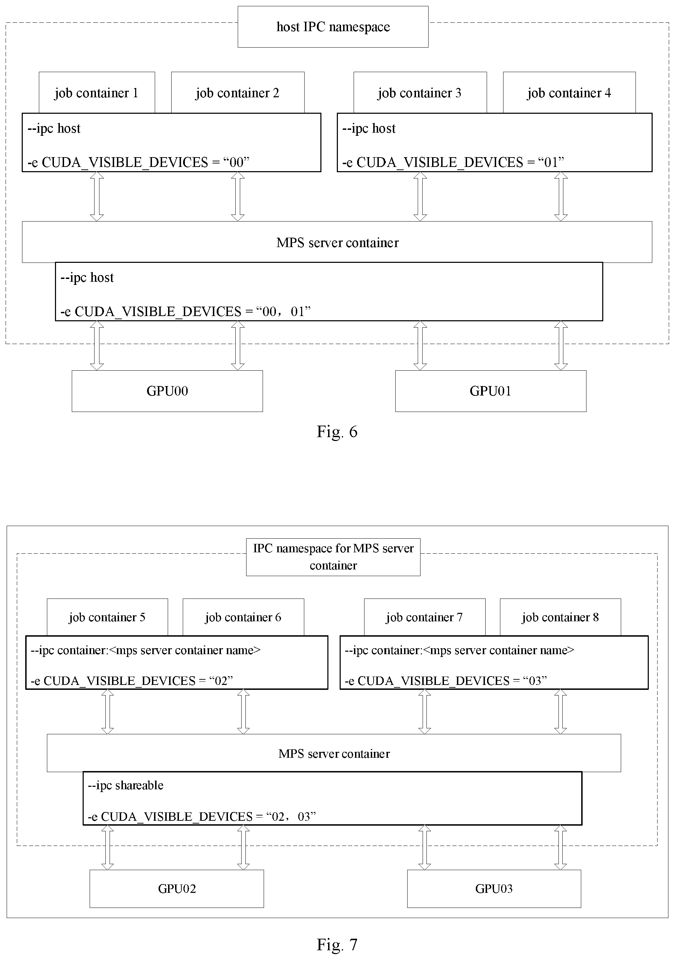

Reference may be made to Fig. 6. Fig. 6 is a schematic diagram of the operation of the apparatus in example I. Assume that the apparatus equipped with a Ubuntu16.04 system contains 2 GTX 1080Ti GPUs (GPU00 and GPU01, respectively) and an MPS server container, and has CUDA driver version 9.0, and nvidia-docker container installed, and its GPU operation method is as follows:
In step 1, the MPS server container is started with a nvidia-docker command and the following parameters are set:
   - -ipc host #, i.e., the IPC namespace for the MPS server container is: the IPC namespace for the host, which is also the IPC namespace for the operating system
   - e CUDA_VISIBLE_DEVICES = the shared GPU configured for the container, i.e., the GPUs configured for the MPS server container are GPU00 and GPU01
In step 2, the method flow enters the MPS server container to execute a nvidia-cuda-mps-control -d command to start daemon (process). That is, processes in the MPS server container are run on GPU00 and GPU01, in which case, GPU00 and GPU01 are shared GPUs.
In step 3, inference job containers 1 and 2 are started with the nvidia-docker command, and the following parameters are set:
   - -ipc host #, i.e., the IPC namespace for job containers 1 and 2 is: the IPC namespace for the host
   - e CUDA_VISIBLE_DEVICES = the shared GPU configured for the container, i.e., the GPU configured for job containers 1 and 2 is GPU00
In step 4, inference job containers 3 and 4 are started with the nvidia-docker command, and the following parameters are set:
   - -ipc host #, i.e., the IPC namespace for job containers 3 and 4 is: the IPC namespace for the host
   - e CUDA_VISIBLE_DEVICES = the shared GPU configured for the container, i.e., the GPU configured for job containers 3 and 4 is GPU01
In step 5, the method flow enters the 4 job containers, respectively, and a program is run to access the inference service. That is, processes in job containers 1 and 2 are run simultaneously on GPU00, and processes in job containers 3 and 4 are run simultaneously on GPU01.
In step 6, a nvidia-smi command is executed at a node terminal, then it may be found that there are only nvidia-cuda-mps-server processes with the same process ID on GPU00 and GPU01, and after checking it may be found that programs in the 4 job containers are executed simultaneously, which means that both GPUs are in the shared mode and managed by one same MPS server.

### Example II:

Reference may be made to Fig. 7. Fig. 7 is a schematic diagram of the operation of the apparatus in example II. The apparatus includes two GPUs, which are GPU02 and GPU03, respectively, and the GPU operating method is as follows:
In step 1, the MPS server container is started with a nvidia-docker command and the following parameters are set:
   - -ipc shareable #, that is, the IPC namespace for the MPS server container is: shareable
   - e CUDA_VISIBLE_DEVICES = the shared GPU configured for the container, i.e., the GPUs configured for the MPS server container are GPU02 and GPU03
In step 2, the method flow enters the MPS server container to execute a nvidia-cuda-mps-control -d command to start daemon. That is, processes in the MPS server container are run on GPU02 and GPU03, in which case, GPU02 and GPU03 are shared GPUs.
In step 3, inference job containers 5 and 6 are started with the nvidia-docker command, and the following parameters are set:
   - -ipc container:<mps server container name> #, i.e., the IPC namespace for job containers 5 and 6 is: the IPC namespace for the MPS server container corresponding to GPU02
   - e CUDA_VISIBLE_DEVICES = r contain, i.e., the GPU configured for job containers 5 and 6 is GPU02
In step 4, inference job containers 7 and 8 are started with the nvidia-docker command, and the following parameters are set:
   - ipc container:<mps server container name> #, i.e., the IPC namespace for job containers 7 and 8 is: the IPC namespace for the mps server container corresponding to GPU03
   - e CUDA_VISIBLE_DEVICES = r contain, i.e., the GPU configured for job containers 7 and 8 is GPU03
In step 5, the method flow enters the 4 job containers, respectively, and a program is run to access the inference service. That is, processes in job containers 3 and 4 are run simultaneously on GPU02, and processes in job containers 7 and 8 are run simultaneously on GPU03 .
In step 6, a nvidia-smi command is executed at a node terminal, then it may be found that there are only nvidia-cuda-mps-server processes with the same process ID on GPU02 and GPU03, and after checking it may be found that programs in the 4 job containers are executed simultaneously, which means that both GPUs are in the shared mode and managed by one same MPS server. (It should be noted that in embodiments of the present disclosure, it is also possible to run processes in 3, 4, or at least 5 containers simultaneously on the shared GPU, but only one process, nvidia-cuda-mps-server, will always be displayed on the shared GPU)

In the GPU operating method provided in the embodiment of the present disclosure, processes in at least two to-be-run containers are run simultaneously on a shared GPU based on an MPS Server process running on the shared GPU, where the shared GPU is a GPU on which the MPS Server process is currently running, and in some implementations, based on the MPS Server process running on the shared GPU, it is possible to run processes in the at least two to-be-run containers simultaneously on the shared GPU, thereby enabling multiple to-be-run containers to share one GPU at the same time, that is, processes in multiple containers can run simultaneously on one GPU, thus improving the GPU utilization.

### Embodiment III:

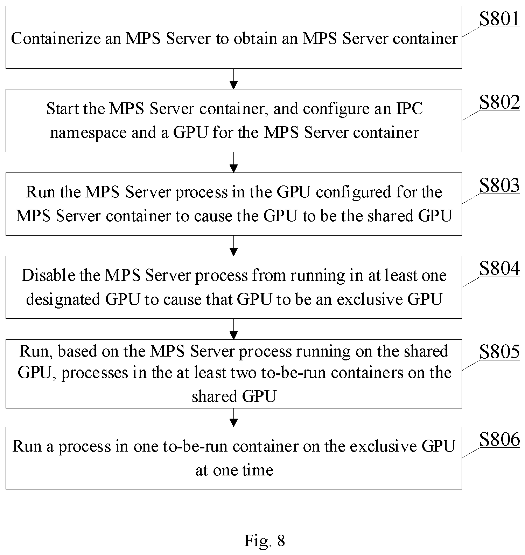

For a better understanding of the present disclosure, this embodiment is illustrated with more specific examples. Reference may be made to Fig. 8. Fig. 8 is a flowchart of a GPU operating method provided by the embodiment of the present disclosure, which includes the following steps.

At S801, an MPS Server is containerized to obtain an MPS Server container.

At S802, the MPS Server container is started and an IPC namespace and a GPU are configured for the MPS Server container.

At S803, an MPS Server process is run in the GPU configured for the MPS Server container to cause the GPU to be the shared GPU.

Here, the shared GPU supports processes in at least two containers to run on it.

At S804, the MPS Server process is disabled from running in at least one designated GPU to cause that GPU to be an exclusive GPU.

In the embodiment of the present disclosure, the designated GPU is a GPU among all GPUs included in the apparatus except the shared GPU.

At S805, based on the MPS Server process running on the shared GPU, processes in the at least two to-be-run containers are run on the shared GPU.

The IPC namespace for the at least two to-be-run containers is identical to the IPC namespace for an MPS Server container to which the MPS Server process running on the shared GPU belongs.

Based on the MPS Server process running on the shared GPU, processes in the at least two to-be-run containers are run in parallel on the shared GPU.

Here, S805 may specifically include: at least two to-be-run containers are started and one same shared GPU is configured for the at least two to-be-run containers, and an IPC namespace is configured for the at least two to-be-run containers, then processes in the at least two to-be-run containers are run on the shared GPU based on the MPS Server process on the shared GPU. Here, the IPC namespace for the to-be-run containers is identical to the IPC namespace for the MPS Server container corresponding to the shared GPU.

In the embodiment of the present disclosure, multiple sets of MPS Server configurations may be included, thus enabling categorized management of different shared GPUs and isolation between specific jobs.

At S806, a process in one to-be-run container is run on the exclusive GPU at one time.

In the embodiment of the present disclosure, it is possible to run a machine learning model training container on the exclusive GPU and a machine learning model inference container on the shared GPU. Of course, the containers running on the exclusive GPU and the shared GPU may be set flexibly according to the actual needs.

This allows the coexistence of the exclusive and shared GPUs in an apparatus that includes at least two GPUs.

For a better understanding, two examples are illustrated here.

### Example I:

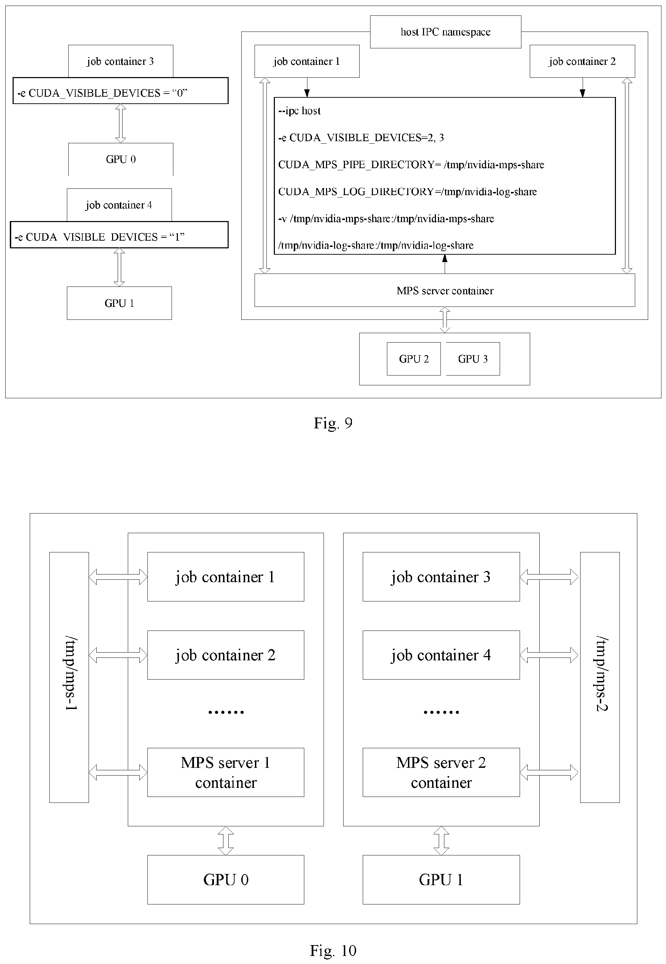

Reference may be made to Fig. 9. Fig. 9 is a schematic diagram of the architecture of example I. Assume that an apparatus equipped with a Ubuntu 16.04 system contains 4 GTX 1080Ti GPUs (GPUO, GPU1, GPU2, and GPU3, respectively), and has CUDA driver version 9.0, and nvidia-docker installed. The detailed operation steps are as follows:
In step 1: the MPS server container is started with a nvidia-docker command and the following parameters are set:
   - ipc host #, i.e., the IPC namespace for the MPS server container is: the IPC namespace for the host
   - e CUDA_VISIBLE_DEVICES=2,3 #, i.e., the GPUs configured for the MPS server container are GPU2 and GPU3
      CUDA_MPS_PIPE_DIRECTORY = /tmp/nvidia-mps-share
      CUDA_MPS_LOG_DIRECTORY = /tmp/nvidia-log-share
      -v /tmp/nvidia-mps-share:/tmp/nvidia-mps -share
      /tmp/nvidia-log-share:/tmp/nvidia-log-share
In step 2: two inference job containers 1 and 2 (i.e., containers 1 and 2 that implement the model inference role) are started with the nvidia-docker command, and the above parameters are set, which are kept consistent with those in the configuration of the MPS server container.
In step 3: the method flow enters the above job containers 1 and 2, the inference service is executed, and client access (i.e. running processes in job containers 1 and 2 on GPUs 2 and 3) is performed.
In step 4: the nvidia-smi command is used on the apparatus, and after checking it is found that the nvidia-cuda-mps-server process is running on GPUs 2 and 3 (no processes on GPUs 0 and 1), which indicates that GPUs 2 and 3 are used in the shared mode, i.e. GPUs 2 and 3 are shared GPUs.
In step 5: a training job container 3 (i.e. container 3 that implements a model training job) is started with a nvidia-docker command, and GPU0 is designated as an exclusive GPU, with the settings being as follows:
   -e CUDA_VISIBLE_DEVICES = /nvidia, i.e., GPU0 is configured for job container 3
In step 6: training job container 4 is also started with the nvidia-docker command, and GPU 1 is designated as an exclusive GPU:
   -e CUDA_VISIBLE_DEVICES = /nvidia, i.e., GPU1 is configured for job container 4
In step 7: the nvidia-smi command is executed on the apparatus, and after checking it is found that processes (not the nvidia-cuda-mps-server process) in job containers 3 and 4 are respectively running on GPU 0 and GPU 1, which indicates that GPUs 0 and 1 are running in the exclusive mode (i.e. GPUs 0 and 1 are exclusive GPUs); and GPUs 2 and 3 are running in the shared mode.

### Example II:

The apparatus is equipped with a Ubuntu 16.04 system, and the apparatus contains 2 GTX 1080Ti GPUs, and has CUDA driver version 9.0, and nvidia-docker installed. The GPU operating method is as follows.

In step 1, an MPS server 1 container is started with a nvidia-docker command and the following parameters are set:
- -ipc host #, i.e., the IPC namespace for the MPS server 1 container is: the IPC namespace for the host
- v /tmp/nvidia-mps-1:/tmp/nvidia-mps-1
   /tmp/nvidia-log-1:/tmp/nvidia-log-1
- e CUDA_VISIBLE_DEVICES = 0 #, i.e., the GPU configured for the MPS server 1 container is GPU0
   CUDA_MPS_PIPE_DIRECTORY = /tmp/nvidia-mps-1
   CUDA_MPS_LOG_DIRECTORY = /tmp/nvidia-log-1

In step 2, training job containers 1 and 2 are started with the nvidia-docker command, and the following parameters are set:
- -ipc host #, i.e. the IPC namespace for job containers 1 and 2 is: the IPC namespace for the host
- v /tmp/nvidia-mps-1:/tmp/nvidia-mps-1
   /tmp/nvidia-log-1:/tmp/nvidia-log-1
- e CUDA_VISIBLE_DEVICES = 0 #, i.e., the GPU configured for job containers 1 and 2 is GPU0
   CUDA_MPS_PIPE_DIRECTORY = /tmp/nvidia-mps-1
   CUDA_MPS_LOG_DIRECTORY = /tmp/nvidia-log-1

In step 3, the method flow enters training job containers 1 and 2, and a training program is executed. That is, processes in job containers 1 and 2 are executed in GPU0 based on the MPS server process.

In step 4, a nvidia-smi command is used on the apparatus, and after checking it is found that the nvidia-cuda-mps-server process is running on GPU 0 (no processes on GPU 1), which indicates that GPU 0 is used in the shared mode.

In step 5, an MPS server 2 container is started with a nvidia-docker command and the following parameters are set:
- -ipc host
- v /tmp/nvidia-mps-2:/tmp/nvidia-mps-2
   /tmp/nvidia-log-2:/tmp/nvidia-log-2
- e CUDA_VISIBLE_DEVICES = 1 #, i.e., the GPU configured for the MPS server 2 container is GPU1
   CUDA_MPS_PIPE_DIRECTORY = /tmp/nvidia-mps-2
   CUDA_MPS_LOG_DIRECTORY = /tmp/nvidia-log-2

In step 6, inference job containers 3 and 4 are started with the nvidia-docker command, and the following parameters are set:
- -ipc host
- v /tmp/nvidia-mps-2:/tmp/nvidia-mps-2
   /tmp/nvidia-log-2:/tmp/nvidia-log-2
- e CUDA_VISIBLE_DEVICES = 1 #, i.e., the GPU configured for job containers 3 and 4 is GPU1
   CUDA_MPS_PIPE_DIRECTORY = /tmp/nvidia-mps-2
   CUDA_MPS_LOG_DIRECTORY = /tmp/nvidia-log-2

In step 7, the method flow enters the inference job containers 3 and 4, and an inference service program is executed. That is, inference processes in job containers 13 and 4 are executed in GPU1 based on the MPS server process.

In step 8, the nvidia-smi command is used on a node, and after checking it is found that the nvidia-cuda-mps-server process is running on GPU 1, which indicates that GPU 1 is used in the shared mode. (At this point, both GPUs are running the nvidia-cuda-mps-server process, but with different process IDs, thus allowing for isolation between the to-be-run containers)

Reference may be made to Fig. 10. Fig. 10 is a schematic diagram of the operation of an apparatus provided in Example II, where job containers 1 and 2 and MPS server 1 container communicate through the PIPE directory /tmp/mps-1 and occupy GPUO; and job containers 3 and 4 and MPS server 2 container communicate through the PIPE directory /tmp/mps-2 and occupy GPU1.

In the GPU operating method provided in the embodiment of the present disclosure, processes in at least two to-be-run containers are run simultaneously on a shared GPU based on an MPS Server process running on the shared GPU, where the shared GPU is a GPU on which the MPS Server process is currently running, and in some implementations, based on the MPS Server process running on the shared GPU, it is possible to run processes in the at least two to-be-run containers simultaneously on the shared GPU, thereby enabling multiple to-be-run containers to share one GPU at the same time, that is, processes in multiple containers can run simultaneously on one GPU, thus improving the GPU utilization. In addition, in the embodiment of the present disclosure, while running processes in the at least two to-be-run containers simultaneously on the shared GPU based on the MPS Server process running on the shared GPU, the MPS Server process is disabled from running on GPUs other than the shared GPU to cause the GPU to be an exclusive GPU, thus enabling the coexistence of a shared GPU and an exclusive GPU on the same apparatus.

### Embodiment IV:

Based on embodiment I, embodiment II, and embodiment III, this embodiment of the present disclosure provides a GPU operating device, including: a running module configured to run, based on an MPS Server process running on a shared GPU, processes in at least two to-be-run containers simultaneously on the shared GPU.

In the embodiment of the present disclosure, the shared GPU is a GPU on which the MPS Server process is currently running. It should be noted that based on MPS technology, it is possible to run multiple processes in parallel on the same GPU. Therefore, in the embodiment of the present disclosure, based on a multi-process service (MPS Server) process running on a shared GPU, it is possible to run processes in at least two to-be-run containers in parallel on the shared GPU, that is, it is possible to run processes in the at least two to-be-run containers simultaneously on the shared GPU, thereby enabling multiple containers to share the same GPU in parallel, thus improving the GPU utilization. Here, a to-be-run container may be a container that implements an inference job, and of course, it may also be other containers.

In the embodiment of the present disclosure, the shared GPU supports processes in at least two to-be-run containers to run in parallel on it, and it should be understood that the shared GPU also supports a process in one to-be-run container to run on it, for example, a process in one to-be-run container may be run on the shared GPU based on the MPS Server process running on the shared GPU.

In the embodiment of the present disclosure, in order to run, based on the MPS Server process running on the shared GPU, processes in the at least two to-be-run containers simultaneously on the shared GPU, the to-be-run containers establish communication with an MPS Server, where IPC communication may be established. In order for the to-be-run containers to establish the IPC communication with the MPS Server, the IPC name space for the to-be-run containers is identical to the IPC name space corresponding to the MPS Server process, i.e., the to-be-run containers and the MPS Server belong to the same IPC name space. In other words, in the embodiment of the present disclosure, the running module is configured to run, based on the MPS Server process running on the shared GPU, processes in the at least two to-be-run containers simultaneously on the shared GPU, where the IPC name space for the at least two containers is identical to the IPC name space corresponding to the MPS Server process.

In the embodiment of the present disclosure, before the running module runs, based on the MPS Server process running on the shared GPU, processes in the at least two to-be-run containers simultaneously on the shared GPU, a starting module is configured to start the MPS Server, and the running module is further configured to run the MPS Server process on at least one GPU to cause that GPU to be a shared GPU.

In the embodiment of the present disclosure, at least one GPU and at least one MPS Server are included. The MPS Server is started and a MPS Server process is run on the at least one GPU to cause the GPU on which the MPS Server process is run to be the shared GPU.

In the embodiment of the present disclosure, the MPS Server may be started directly in the operating system. In this way, the IPC name space corresponding to the MPS Server process is the IPC name space for the operating system, and then the running module runs, based on the MPS Server process running on the shared GPU, processes in at least two to-be-run containers belonging to the same IPC name space as the operating system on the shared GPU.

In the embodiment of the present disclosure, it is also possible to start an MPS Server container to start the MPS Server. That is, before starting the MPS Server, the MPS Server is containerized (i.e., the MPS Server is made into a container image) to obtain the MPS Server container, then the MPS Server container is started to start the MPS Server, and the MPS Server process in the MPS Server container is run on at least one GPU. In this way, the IPC name space corresponding to the MPS Server process is the IPC name space for the MPS Server container, and then in S 101, based on the MPS Server process running on the shared GPU, processes in at least two to-be-run containers belonging to the same IPC name space as the MPS Server container are run simultaneously on the shared GPU.

In the embodiment of the present disclosure, the process of the running module starting the MPS Server container and running the MPS Server process in the MPS Server container on at least one GPU may be as follows: starting the MPS Server container, configuring an IPC name space for the MPS Server container, configuring at least one GPU for the MPS Server container, and running the MPS Server process in the MPS Server container in the GPU configured for the MPS Server container, thus causing the GPU to be a shared GPU. In the embodiment of the present disclosure, N (where N is an integer greater than or equal to 1) MPS Servers may be included, and thus the MPS Servers may be containerized respectively to obtain N MPS Server containers. Therefore, it is possible to start at least one MPS Server container, configure an IPC name space for each started MPS Server container, configure at least one GPU for each started MPS Server container respectively, and run an MPS Server process in each MPS Server container in a GPU corresponding to the MPS Server container, thus causing that GPU to be a shared GPU. Here, the configured IPC name space may be the IPC name space for the operating system or other IPC name space; and when configuring an IPC name space for each MPS Server container, the IPC name space for each MPS Server container may be the same or different. The MPS Server containers corresponding to different GPUs may be the same or different.

For a better understanding, the example of starting two MPS Server containers is illustrated here. MPS Server container 1 and MPS Server container 2 are started, a first IPC name space is configured for MPS Server container 1, a second IPC name space is configured for MPS Server container 2 (where the first IPC name space and the second IPC name space may be the same or different), and GPU0 and GPU1 are configured for MPS Server container 1 and GPU2 for MPS Server container 2, then MPS Server process 1 in MPS Server container 1 is run on GPU0 and GPU1, and MPS Server 1 in MPS Server container 2 is run on GPU2, so that GPU0, GPU1 and GPU2 are all shared GPUs.

In the embodiment of the present disclosure, running, based on the MPS Server process running on the shared GPU, processes in at least two to-be-run containers belonging to the same IPC name space as the MPS Server container simultaneously on the shared GPU includes the following steps: starting at least two to-be-run containers and configuring an IPC name space and a shared GPU for the to-be-run containers, and running processes in the to-be-run containers simultaneously on the shared GPU based on an MPS Server process running on the shared GPU. Here, the IPC name space configured for the to-be-run containers is identical to the IPC name space for the MPS Server container corresponding to the configured shared GPU, and the MPS Server container corresponding to the shared GPU is: the MPS Server container to which the MPS Server process running on the shared GPU belongs. For example, assume that MPS Server process 3 in MPS Server container 3 is running on shared GPU 3, and MPS Server container 3 belongs to a third IPC name space. The to-be-run container 1 and to-be-run container 2 are started, and the shared GPUs configured for the to-be-run container 1 and to-be-run container 2 are the shared GPU 3, and the IPC name spaces configured are both the third IPC name space, then processes in both the to-be-run container 1 and the to-be-run container 2 are run on the shared GPU 3 based on MPS Server process 3.

In the embodiment of the present disclosure, while running processes in the at least two to-be-run containers simultaneously on the shared GPU based on the MPS Server process running on the shared GPU, the MPS Server process may also be disabled from running on at least one designated GPU to cause the GPU to be an exclusive GPU, where the designated GPU is a GPU other than the shared GPU, and the exclusive GPU is a GPU that only supports a process in one container to run on it at one time. In other words, in the embodiment of the present disclosure, when at least two GPUs are included, the coexistence of the shared GPU and the exclusive GPU is possible.

In the GPU operating device provided in the embodiment of the present disclosure, processes in at least two to-be-run containers are run simultaneously on a shared GPU based on an MPS Server process running on the shared GPU, where the shared GPU is a GPU on which the MPS Server process is currently running, and in some implementations, based on the MPS Server process running on the shared GPU, it is possible to run processes in the at least two to-be-run containers simultaneously on the shared GPU, thereby enabling multiple to-be-run containers to share one GPU at the same time, that is, processes in multiple containers can run simultaneously on one GPU, thus improving the GPU utilization.

### Embodiment V:

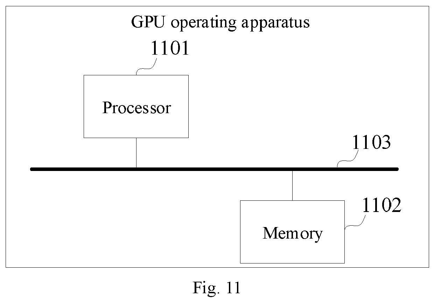

This embodiment further provides a GPU operating apparatus, as shown in Fig. 11, including a processor 1101, a memory 1102, and a communication bus 1103.

The communication bus 1103 is configured to implement connection and communication between the processor 1101 and the memory 1102.

The processor 1101 is configured to execute a GPU operating program stored in the memory 1102 to perform: running, based on an MPS server process running on a shared GPU, processes in at least two to-be-run containers simultaneously on the shared GPU, where the shared GPU is a GPU on which the MPS Server process is currently running.

This embodiment further provides a storage medium that includes a volatile or nonvolatile, removable or non-removable medium implemented in any method or technology for storing information, such as computer-readable instructions, data structures, computer program modules, or other data. The computer-readable storage medium includes, but is not limited to, random access memory (RAM), read-only memory (ROM), electrically erasable programmable read-only memory (EEPROM), flash memory or other memory technologies, compact disc read-only memory (CD-ROM), digital versatile disc (DVD) or other optical disc storage, cassettes, magnetic tapes, magnetic disc storage or other magnetic storage devices, or any other media that can be configured to store desired information and can be accessed by computers.

The storage medium in this embodiment may be used for storing a GPU operating program that is executable by a processor to perform: running, based on an MPS server process running on a shared GPU, processes in at least two to-be-run containers simultaneously on the shared GPU, where the shared GPU is a GPU on which the MPS Server process is currently running.

It should be noted that, in order not to exhaust the description, not all the examples in embodiment I, embodiment II, and embodiment III. are fully described in the embodiments of the present disclosure, and it should be clear that all the examples in embodiment I, embodiment II, and embodiment III are applicable to the embodiments of the present disclosure.

According to the GPU operating method, device and apparatus, and the storage medium provided by the embodiments of the present disclosure, processes in at least two to-be-run containers are run simultaneously on a shared GPU based on an MPS Server process running on the shared GPU, where the shared GPU is a GPU on which the MPS Server process is currently running, and in some implementations, based on the MPS Server process running on the shared GPU, it is possible to run processes in the at least two to-be-run containers simultaneously on the shared GPU, thereby enabling multiple to-be-run containers to share one GPU at the same time, that is, processes in multiple containers can run simultaneously on one GPU, thus improving the GPU utilization.

As can be seen, it should be understood by those having ordinary skills in the art that all or some of the steps in the methods disclosed above, functional modules/units in the systems and devices disclosed above may be implemented as software (which may be implemented by computer program code executable by a computing device), firmware, hardware, and appropriate combinations thereof. In the hardware implementation, the division between functional modules/units mentioned in the above description does not necessarily correspond to the division of physical components; for example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application specific integrated circuit.

Furthermore, it is well known to those having ordinary skills in the art that communication media typically contain computer-readable instructions, data structures, computer program modules or other data in a modulated data signal such as a carrier wave or other transmission mechanism, and may include any information delivery media. Therefore, the present disclosure is not limited to any particular combination of hardware and software.

The foregoing is a further detailed description of the embodiments the present disclosure in conjunction with particular implementations, and specific implementations of the present disclosure should not be construed as being limited to the description. For those having ordinary skills in the art to which the present disclosure pertains, without departing from the concept of the present disclosure, several simple deductions or substitutions can be made, which should be regarded as falling within the scope of the present disclosure.

## Claims

1. A graphics processing unit (GPU) operating method, comprising:
running, based on a multi-process service (MPS) server process running on a shared GPU, processes in at least two to-be-run containers simultaneously on the shared GPU, wherein the shared GPU is a GPU on which the MPS Server process is currently running.

2. The GPU operating method of claim 1, wherein an inter-process communication (IPC) name space corresponding to the MPS Server process is identical to an IPC name space for the to-be-run containers.

3. The GPU operating method of claim 2, before running, based on an MPS Server process running on a shared GPU, processes in at least two to-be-run containers simultaneously on the shared GPU, further comprising:
starting an MPS Server and running the MPS Server process on at least one GPU to cause the GPU to be the shared GPU.

4. The GPU operating method of claim 3, wherein
starting an MPS Server and running the MPS Server process on at least one GPU to cause the GPU to be the shared GPU comprises:
starting the MPS Server directly in an operating system and running the MPS Server process on the at least one GPU to cause the GPU to be the shared GPU;
and
running, based on an MPS Server process running on a shared GPU, processes in at least two to-be-run containers on the shared GPU comprises:
running, based on the MPS Server process running on the shared GPU, processes in at least two to-be-run containers belonging to the same IPC name space as the operating system on the shared GPU.

5. The GPU operating method of claim 3, wherein starting an MPS Server and running the MPS Server process on at least one GPU to cause the GPU to be the shared GPU comprises:
starting an MPS Server container and running an MPS Server process in the MPS Server container on the at least one GPU to cause the GPU to be the shared GPU;
and
running, based on an MPS Server process running on a shared GPU, processes in at least two to-be-run containers simultaneously on the shared GPU comprises:
running, based on the MPS Server process running on the shared GPU, processes in at least two to-be-run containers belonging to the same IPC name space as the MPS Server container simultaneously on the shared GPU.

6. The GPU operating method of claim 5, wherein starting an MPS Server container and running an MPS Server process in the MPS Server container on the at least one GPU to cause the GPU to be the shared GPU comprises:
starting an MPS Server container;
configuring an IPC name space for the MPS Server container;
configuring at least one GPU for the MPS Server container; and
running, in the GPU configured for the MPS Server container, the MPS Server process in the MPS Server container to cause the GPU configured for the MPS Server container to be the shared GPU.

7. The GPU operating method of claim 5, wherein running, based on the MPS Server process running on the shared GPU, processes in at least two to-be-run containers belonging to the same IPC name space as the MPS Server container simultaneously on the shared GPU comprises:
starting at least two to-be-run containers and configuring an IPC name space and a shared GPU for the to-be-run containers, wherein the IPC name space for the to-be-run containers is identical to an IPC name space for an MPS Server container corresponding to the shared GPU; and
running, based on an MPS Server process running on the shared GPU, processes in the to-be-run containers simultaneously on the shared GPU.

8. The GPU operating method of any one of claims 1 to 7, wherein running, based on an MPS Server process running on a shared GPU, processes in at least two to-be-run containers simultaneously on the shared GPU further comprises:
disabling the MPS Server process from running on at least one designated GPU to cause the designated GPU to be an exclusive GPU, wherein the exclusive GPU supports a process in one container to run on the exclusive GPU at one time, and the designated GPU is a GPU other than the shared GPU.

9. A GPU operating device, comprising:
a running module configured to run, based on an MPS Server process running on a shared GPU, processes in at least two to-be-run containers simultaneously on the shared GPU, wherein the shared GPU is a GPU on which the MPS Server process is currently running.

10. A GPU operating apparatus, comprising a processor, a memory and a communication bus, wherein:
the communication bus is configured to implement connection and communication between the processor and the memory; and
the processor is configured to execute a GPU operating program stored in the memory to perform:
running, based on a multi-process service (MPS) server process running on a shared GPU, processes in at least two to-be-run containers simultaneously on the shared GPU, wherein the shared GPU is a GPU on which the MPS Server process is currently running.

11. A storage medium storing a GPU operating program, wherein the GPU operating program is executable by one or more processors to perform:
running, based on a multi-process service (MPS) server process running on a shared GPU, processes in at least two to-be-run containers simultaneously on the shared GPU, wherein the shared GPU is a GPU on which the MPS Server process is currently running.
